# EUROPEAN PATENT APPLICATION

(11) **EP 1 860 813 A1**
(43) Date of publication of application: **28.11.2007**
(21) Application number: 07010445.0
(22) Date of filing: 25.05.2007
(51) Int. Cl.: H04L 1/18

(54) **Method and apparatus for handling packet data in a wireless communications system**

(30) Priority: 25.05.2006 US 803134 P
(71) Applicant: Innovative Sonic Limited, Road Town Tortola (VG)
(72) Inventor: Jiang, Sam Shiaw-Shiang, Peitou, Tapei City (TW)
(74) Representative: Schaeberle, Steffen

(57) **Abstract**

A method of handling packets for a user equipment in a wireless communications system includes activating a hybrid automatic repeat request procedure (402), receiving and storing data of a first packet into a buffer (404), receiving a second packet following the first packet (406), and utilizing a predefined process to determine whether the second packet is a retransmission of the first packet. The predefined process does not utilize a new data indicator transmitted on a control channel.

## Description

This application claims the benefit of U.S. Provisional Application No. 60/803,134, filed on MAY 25, 2006 and entitled "Bit Correlation Method and Apparatus for Detecting New Data Packet in HARQ Processes", the contents of which are incorporated herein by reference.

The present invention relates to a method and apparatus of handling packets in a wireless communications system according to the pre-characterizing clauses of claims 1, 7, 13, and 14.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

In the prior art, HSDPA and HSUPA adopt Hybrid Automatic Repeat Request (HARQ) technology to enhance retransmission rate and reduce transmission delay. HARQ is a technology combining Feed-forward Error Correction (FEC) and ARQ methods, which triggers retransmission according to positive/negative acknowledgement signals (ACK/NACK) transmitted from a receiving end, and stores useful information about the last failed transmission (received but not successfully decoded) for later use. During retransmission, the HARQ process uses the same transport block size as that used in the previous transmission, thus the retransmitted transport block has the same amount of bits. However, modulation type, channelization code set, and transmission power utilized may be different for the two transmissions. In order to minimize the number of retransmission requests, HARQ uses one of two Soft-Combining methods, namely Chase Combining (CC) and Incremental Redundancy (IR), to ensure that messages can be successfully decoded. CC transmits a packet the same as the erroneous packet, and the decoder combines all the received packets before performing decoding. IR increases redundancy to help in recovery from transmission errors, sequentially transmitting packets having parts of the erroneous packet, and the decoder combines the packets.

In HSDPA, after receiving packet data units (PDUs) from a network end (UTRAN), the user equipment (UE) stores the PDUs in a soft buffer or discards them based on a status of a previous transmission. Then, the UE decodes the stored PDUs and performs scheduling for multiple decoded PDUs received from several transmissions. In order to quickly determine whether a PDU received by the UE comprises new data, a Medium Access Control (MAC) specification, 3GPP TS 25.321 V7.0.0, developed by the 3rd Generation partnership Project (3GPP), defines a new data indicator (NDI), having a value of 1 or 0, for indicating that a transmission is a new transmission or a retransmission with respect to the previous transmission. Every time a new transmission is being established, such as after receiving an ACK from the UE, the UTRAN increments the previous NDI value by one and then sends the updated NDI for the new transmission. On the contrary, when establishing a retransmission, such as receiving a NACK from the UE, the UTRAN uses the same NDI. Thus, if the UE receives NDls having different values, such as '1' '0' or '0' '1', in two consecutive transmissions, the latter transmission is regarded as a new transmission with respect to the former one. The UE then decodes the PDUs of the latter transmission and stores the PDUs in the soft buffer to replace originally existing data. Oppositely, if the UE receives the NDIs having the same values, such as '0' '0' or '1' '1', in the two consecutive transmissions, the latter transmission is regarded as a retransmission with respect to the former one. In such situation, if the former transmission was decoded unsuccessfully, the UE performs soft combining on the PDUs of the latter transmission and the data in the soft buffer. Meanwhile, the data in the soft buffer may be the PDUs of the past several transmissions due to unsuccessful decoding. Oppositely, if the former transmission has been decoded successfully, the UE delivers the data in the soft buffer to an upper entity such as a reordering entity, and returns an ACK. In addition, the PDU of the latter transmission is discarded by the UE. If a certain transmission error, such as discontinuous transmission to acknowledgement (DTX_to_ACK) error, occurs, the HARQ process may cause the UE to miss useful PDUs, resulting in incomplete collection of data blocks in the upper layer (RLC).

The present invention relates to a method and apparatus of handling packets in a wireless communications system, and more particularly, to a method and apparatus capable of decreasing signaling overhead and enhancing utilization of radio resources.

This in mind, the present invention aims at providing a method and apparatus of handling packets in a wireless communications system that decreases signaling overhead and enhancing utilization of radio resources.

This is achieved by a method and apparatus of handling packets in a wireless communications system according to claims 1, 7, 13, and 14. The dependent claims pertain to corresponding further developments and improvements.

As will be seen more clearly from the detailed description following below, the claimed method of handling packets in a wireless communications system comprises activating a hybrid automatic repeat request procedure, receiving and storing data of a first packet into a buffer, receiving a second packet following the first packet, and utilizing a predefined process to determine whether the second packet is a retransmission of the first packet. The predefined process does not utilize a new data indicator transmitted on a control channel.

in the following, the invention is further illustrated by way of example, taking reference to the accompanying drawings. Thereof
Fig. 1 is a schematic diagram of an HARQ process for transmitting packets in HSDPA according to the prior art.
Fig. 2 is a function block diagram of a wireless communications device.
Fig. 3 is a diagram of program code of Fig. 1.
Fig. 4 is a flowchart of a process according to an embodiment of the present invention.

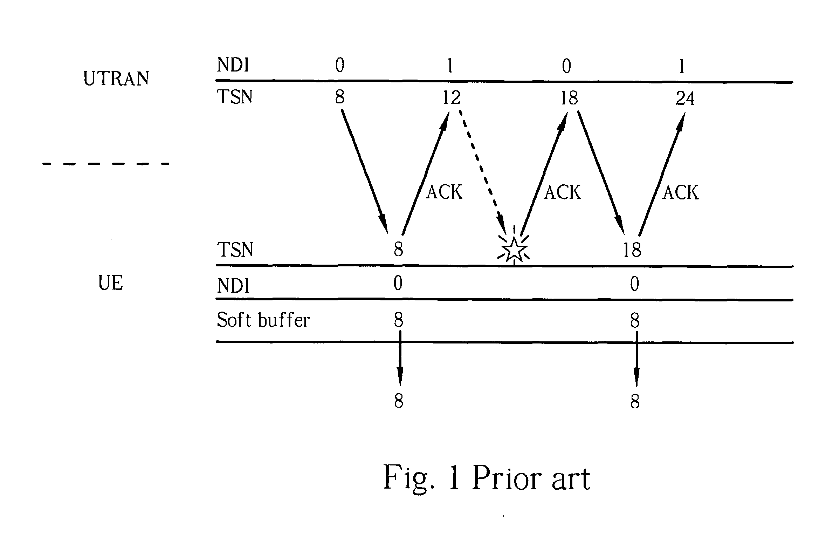

Please refer to Fig. 1, which is a schematic diagram of an HARQ process for transmitting packets in HSDPA according to the prior art. In Fig. 1, assume that a UTRAN (network end) prepares four PDUs for a UE and sends corresponding NDls for each transmission. The transmission sequence numbers (TSNs) of the PDUs are 8, 12, 18, and 24, respectively. In the beginning, the UTRAN transmits the PDU with NDI = 0 and TSN = 8. The UE stores the PDU in a soft buffer after receiving and decoding the PDU successfully, and thereby returns an ACK to the UTRAN. Due to the ACK reported, the UTRAN then transmits the PDU with NDI = 1 and TSN = 12 to the UE. Meanwhile, the transmission error DTX_to_ACK occurs, meaning that the PDU with TSN = 12 is lost during transmission while the UTRAN receives an ACK for the PDU with TSN = 12 because of radio interference. In this situation, the UTRAN mistakenly determines that the UE has successfully received the PDU with NDI = 1 and TSN = 12, and subsequently transmits the PDU with NDI = 0 and TSN = 18. From the standpoint of the UE, the PDUs with TSN = 8 and TSN = 18 have the same NDI value, so the PDU with TSN = 18 is considered as a retransmission of the PDU with TSN = 8. According to the foregoing MAC specification, since the PDU with TSN = 8 has been successfully decoded, the UE will deliver the data in the soft buffer, which includes the PDU with TSN = 8, to the upper layer, return an ACK to the UTRAN, and discard the PDU (with NDI = 0 and TSN = 18) mistakenly determined to be a retransmission packet. Therefore, the UTRAN determines that the UE has successfully received the PDU with TSN = 18, and subsequently transmits the PDU with TSN = 24. As a result, the UE misses the PDU with TSN = 18 and the upper layer cannot completely collect and reconstruct the data blocks.

In addition, along with each transmission of a PDU, at least one bit for the NDI need to be transmitted on a control channel, of which the resource is limited and valuable. The overhead of this kind of out-band signaling is quite high.

The present invention does not transmit NDI for each packet on the control channel. One preferred method is to determine a received packet being a new transmission or a retransmission of the previously received packet according to bit correlation of the two received packets.

In general, contents of different data packets will be quite different to each other. For a ciphered channel, ciphered contents of different data packet are almost completely uncorrelated to each other. In other word, their bit distributions are random to each other so that the bit correlation between two different data packets, which is defined to be the percentage of corresponding bits that are same between the two data packets, will be closed to 50%. On the other hand, for the worst radio condition that can sustain a radio connection, the block error rate is assumed to be in the range of 10⁻¹. If a packet consists of 100 bits with bit error rate x, we have (1-x)¹⁰⁰ = 1- 10⁻¹. Thus, x is around 10⁻³. Therefore, the bit correlation of two transmissions of the same packet will be as high as 0.999. From the above analysis, it is concluded that bit correlation can be used to reliably determine whether two transmissions belong to the same data packet or not, which is a preferred embodiment of the present invention to avoid the need of transmitting NDI on the control channel.

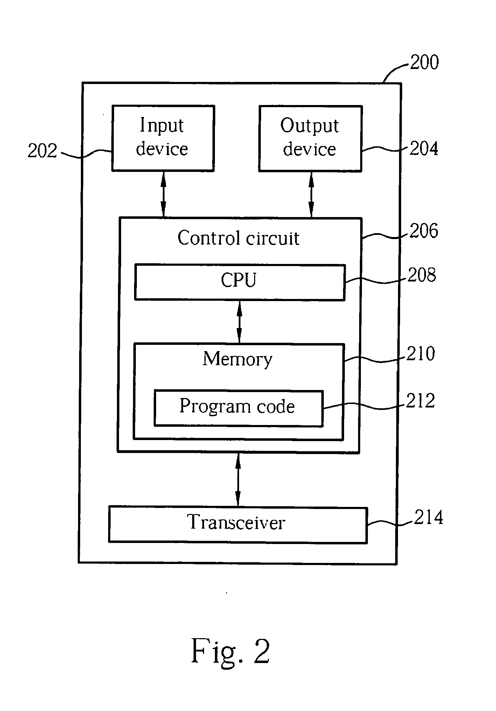

Please refer to Fig. 2, which is a functional block diagram of a communications device 200. For the sake of brevity, Fig. 2 only shows an input device 202, an output device 204, a control circuit 206, a central processing unit (CPU) 208, a memory 210, a program code 212, and a transceiver 214 of the communications device 200. In the communications device 200, the control circuit 206 executes the program code 212 in the memory 210 through the CPU 208, thereby controlling operation of the communications device 200. The communications device 200 can receive signals input by a user through the input device 202, such as a keyboard, and can output images and sounds through the output device 204, such as a monitor or speakers. The transceiver 214 is used to receive and transmit wireless signals, delivering received signals to the control circuit 206, and outputting signals generated by the control circuit 206 wirelessly. From a perspective of a communications protocol framework, the transceiver 214 can be seen as a portion of Layer 1, and the control circuit 206 can be utilized to realize functions of Layer 2 and Layer 3.

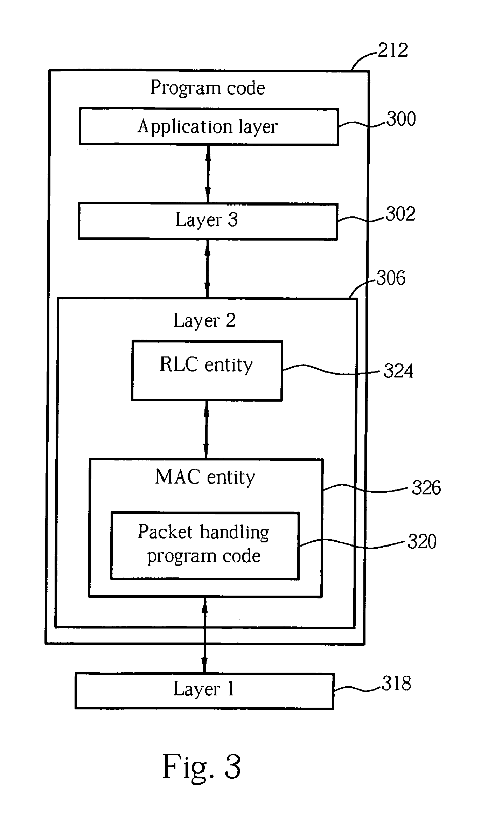

Please continue to refer to Fig. 3, which is a diagram of the program code 212 shown in Fig. 2. The program code 212 includes an application layer 300, a Layer 3 302, and a Layer 2 306, and is coupled to a Layer 1 318. The Layer 2 306 comprises two sub-layers: a radio link control (RLC) entity 324 and a media access control (MAC) entity 326. The MAC entity 326 can match packets received from different logic channels of the RLC entity 324 to common, shared, or dedicated transport channels according to radio resource allocation commands of the Layer 3 (RRC layer) 302, for performing channel mapping, multiplexing, transport format selection, or random access control.

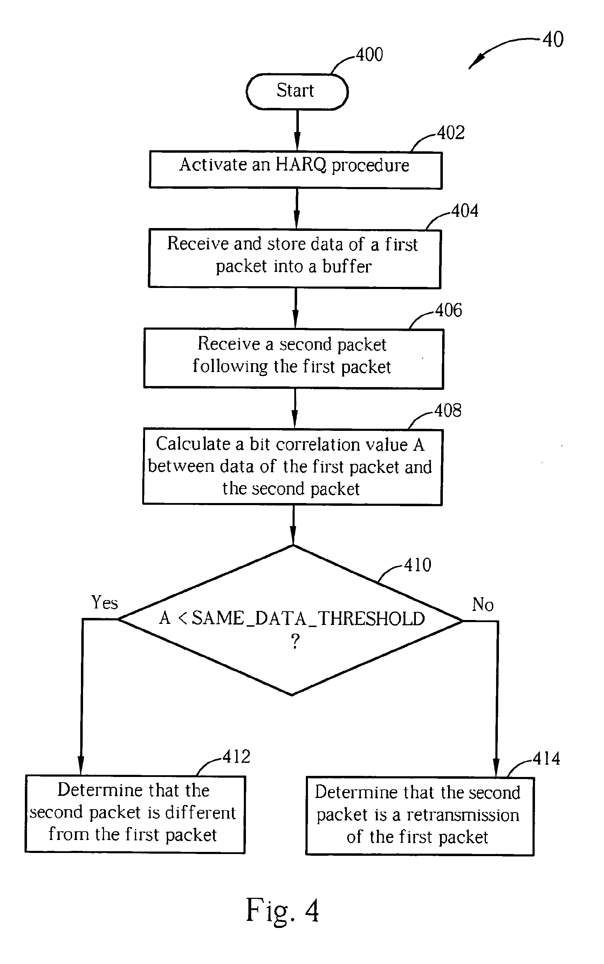

Preferably, the communications device 200 is applied to a high-speed downlink packet access system (HSDPA) of a third generation (3G) mobile communications system, and utilizes the program code 212 to execute the HARQ process. Therefore, the present invention provides a packet handling program code 320 for properly handling packets to enhance radio resource utility. Please refer to Fig. 4, which is a schematic diagram of a process 40 according to a preferred embodiment of the present invention. The process 40 can be compiled into the packet handling program code 320 and thereby includes the following steps:
- Step 400:: Start.
- Step 402:: Activate an HARQ procedure.
- Step 404:: Receive and store data of a first packet into a buffer.
- Step 406:: Receive a second packet following the first packet.
- Step 408:: Calculate a bit correlation value A between data of the first packet and the second packet.
- Step 410:: Determine whether the bit correlation value A is smaller than a threshold value SAME_DATA_THRESHOLD? If so, proceed to step 412; if not, proceed to step 414.
- Step 412:: Determine that the second packet is different from the first packet.
- Step 414:: Determine that the second packet is a retransmission of the first packet.

According to the process 40, in the HARQ procedure, the embodiment of the present invention calculates the bit correlation value between the data of adjacent packets (the first and second packets), and accordingly determines whether the two packets are different or the same (retransmission). Furthermore, in step 412, when the second packet is determined to be different from the first packet, the data of the first packet in the soft buffer is replaced by the data of the second packet. In step 414, when the second packet is determined to be the retransmission of the first packet, if the first packet is unsuccessfully decoded, the data of the second packet can be combined with the data in the soft buffer; if the first packet is successfully decoded, the UE can transmit the data in the soft buffer to the upper layer, return an ACK, and discard the second packet. Preferably, the threshold value SAME_DATA_THRESHOLD can be configured by the network, can be set to a fixed value, such as 0.9 or 0.95, can be set according to the packet length, or can be dynamically adjusted according to the measured bit error rate when the UE is in connection with the network.

The embodiment of the present invention does not use NDI. The process 40 of the preferred embodiment of the present invention uses the bit correlation value to determine when two packets are different or the same. In such situation, if the transmission error DTX_to_ACK occurs, the embodiment of the present invention does not miss useful PDUs, and can timely trigger retransmission of the network. More important, the overhead for NDI out-band signaling is removed, so that radio resource efficiency is improved.

## Claims

1. A method of handling packets in a wireless communications system comprising:
activating a hybrid automatic repeat request procedure (402);
receiving and storing data of a first packet into a buffer (404);
receiving a second packet following the first packet (406); and
utilizing a predefined process to determine whether the second packet is a retransmission of the first packet,
**characterized in that** the predefined process does not utilize a new data indicator transmitted on a control channel.

2. The method of claim 1, **characterized in that** the predefined process comprises:
calculating a bit correlation value between data of the first packet and the second packet (408);
determining that the second packet is different from the first packet when the bit correlation value is smaller than a threshold value (410, 412); and
determining that the second packet is a retransmission of the first packet when the bit correlation value is greater than or equal to the threshold value (410, 414).

3. The method of claim 2 further comprising setting the threshold value through a network of the wireless communications system.

4. The method of claim 2 further comprising setting the threshold value according to packet lengths of the first packet and the second packet.

5. The method of claim 2 further comprising setting the threshold value according to a bit error rate between a user equipment and a network of the wireless communications system.

6. The method of claim 2, **characterized in that** the wireless communications system is a high-speed downlink packet access system of a third generation wireless communications system.

7. A communications device (200) for properly handling packets to enhance utilization of radio resources in a wireless communications system, the communications device comprising:
a control circuit (206) for realizing functions of the communications device (200);
a central processing unit (208) installed in the control circuit (206), for executing a program code (212) to command the control circuit (206); and
a memory (210) installed in the control circuit (206) and coupled to the central processing unit (208) for storing the program code (212);
wherein the program code (212) comprises:
activating a hybrid automatic repeat request procedure (402);
receiving and storing data of a first packet into a buffer (404);
receiving a second packet following the first packet (406); and
the program code (212) utilizing a predefined process to determine whether the second packet is a retransmission of the first packet,
**characterized in that** the predefined process does not utilize a new data indicator transmitted on a control channel.

8. The communications device of claim 7, **characterized in that** the predefined process in the program code (212) comprises:
calculating a bit correlation value between data of the first packet and the second packet (408);
determining that the second packet is different from the first packet when the bit correlation value is smaller than a threshold value (410, 412); and
determining that the second packet is a retransmission of the first packet when the bit correlation value is greater than or equal to the threshold value (410, 414).

9. The communications device of claim 8, **characterized in that** the program code (212) further comprises setting the threshold value through a network of the wireless communications system.

10. The communications device of claim 8, **characterized in that** the program code (212) further comprises setting the threshold value according to packet lengths of the first packet and the second packet.

11. The communications device of claim 8, **characterized in that** the program code (212) further comprises setting the threshold value according to a bit error rate between a user equipment and a network of the wireless communications system.

12. The communications device of claim 8, **characterized in that** the wireless communications system is a high-speed downlink packet access system of a third generation wireless communications system.

13. A method of transmitting packets in a wireless communications system comprising:
activating a hybrid automatic repeat request procedure;
transmitting data of a packet on a data transmission channel; and
transmitting an outband signaling on a control channel,
**characterized in that** the outband signaling does not carry a new data indicator.

14. A communications device (200) for transmitting packets to enhance utilization of radio resources in a wireless communications system, the communications device comprising:
a control circuit (206) for realizing functions of the communications device (200);
a central processing unit (208) installed in the control circuit (206), for executing a program code (212) to command the control circuit (206); and
a memory (210) installed in the control circuit (206) and coupled to the central processing unit (208) for storing the program code (212);
wherein the program code (212) comprises:
activating a hybrid automatic repeat request procedure;
transmitting data of a packet on a data transmission channel; and
the program code (212) transmitting an outband signaling on a control channel,
**characterized in that** the outband signaling does not carry a new data indicator.
